# EUROPEAN PATENT APPLICATION

(11) **EP 4 586 329 A1**
(43) Date of publication of application: **16.07.2025**
(21) Application number: 23898168.2
(22) Date of filing: 20.11.2023
(51) Int. Cl.: H01M 4/04, B30B 11/20

(54) **ROLLING DEVICE AND ROLLING METHOD FOR MANUFACTURING ELECTRODE**

(30) Priority: 01.12.2022 KR 20220165533; 17.11.2023 KR 20230159672
(71) Applicant: LG Energy Solution, Ltd., Seoul 07335 (KR)
(72) Inventor: CHOI, Hongjun, Daejeon 34122 (KR); CHOI, Kyuhyun, Daejeon 34122 (KR); SEOL, Jeong Soo, Daejeon 34122 (KR); KONG, Jinhak, Daejeon 34122 (KR); SONG, Won Seob, Daejeon 34122 (KR); CHUNG, Changkwon, Daejeon 34122 (KR)
(74) Representative: Plasseraud IP
(86) International application number: PCT/KR2023/018665
(87) International publication number: WO 2024/117637

(57) **Abstract**

A rolling apparatus for manufacturing an electrode according to one embodiment of the present invention includes: a rolling member that rolls an electrode substrate when the electrode substrate passes through; and a non-coated portion drawing member that additionally draws the non-coated portion of the electrode substrate that has passed through the rolling member, wherein the non-coated portion drawing member is configured such that the relative position of the non-coated portion drawing member relative to the electrode substrate is adjusted according to the state of the non-coated portion of the electrode substrate.

## Description

### [TECHNICAL FIELD]

### Cross Citation with Related Application(s)

This application claims priority benefit of Korean Patent Application No. 10-2022-0165533 filed on December 1, 2022 and Korean Patent Application No. 10-2023-0159672 filed on November 17, 2023 in the Korean Intellectual Property Office, the disclosures of which are incorporated herein by their reference in their entirety.

The present invention relates to a rolling apparatus for manufacturing an electrode and a rolling method for manufacturing the electrode, and more particularly, to a rolling apparatus for manufacturing an electrode and a rolling method for manufacturing the electrode, which enable precise adjustment of additional drawing of a non-coated portion of an electrode substrate in an electrode rolling process.

### [BACKGROUND]

In modem society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Currently commercialized secondary batteries include a nickel cadmium battery, a nickel hydrogen battery, a nickel zinc battery, a lithium secondary battery, and the like. Among them, the lithium secondary battery has come into the spotlight because it has advantages, for example, hardly exhibiting memory effects compared to nickel-based secondary batteries and thus being freely charged and discharged, and having very low self-discharge rate and high energy density.

The manufacturing process of such a lithium secondary battery is roughly classified into an electrode process, an assembly process, and an activation process. The electrode process is divided into an active material mixing process, an electrode coating process, a rolling process, a slitting process, a winding process, and the like. Among them, the rolling process is a process of reducing the thickness of the electrode substrate after the coating process is finished to thereby increase the capacity density, and of passing the electrode substrate between a pair of rolling rolls heated to a high temperature and compressing it to a desired thickness in order to increase the adhesion between the electrode current collector and the electrode active material.

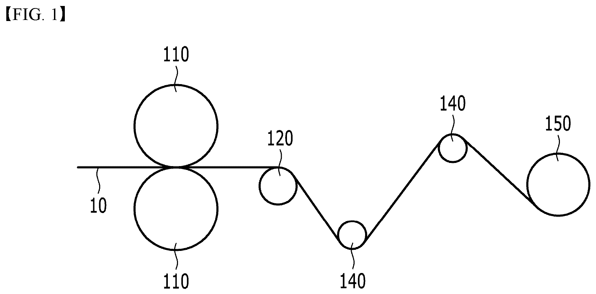

On the other hand, when rolling the electrode substrate, there is a problem that phenomena such as a swell may occur in a non-coated portion 11 of the electrode substrate after rolling due to the difference in drawability between a coated portion 12 coated with an active material and a non-coated portion 11 not coated with an active material. In order to improve this problem, referring to FIG. 1, the process proceeds in such a way that additional drawing is applied to the non-coated portion 11 of the electrode substrate 10 which has passed between the rolling members 110, by the non-coated portion drawing member 120. However, depending on the tension applied by the non-coated portion drawing member 120 to the non-coated portion 11 of the electrode substrate, the swell of the non-coated portion 11 may be improved, but in some cases, it may further worsen.

Therefore, there is a need to provide a method for more effectively improving the problem of a swell occurring in the non-coated portion 11 of the electrode substrate during the rolling process of the electrode substrate.

### [DETAILED DESCRIPTION OF THE INVENTION]

### [Technical Problem]

It is an object of the present invention to additionally draw the non-coated portion 11 but adjust the degree of drawing during the rolling process of the electrode substrate, thereby improving the problem of a swell occurring in the non-coated portion 11 of the electrode substrate.

However, the technical problems to be solved by embodiments of the present invention are not limited to the above-described problems, and can be variously expanded within the scope of the technical idea included in the present invention.

### [Technical Solution]

According to one embodiment of the present invention, there is provided a rolling apparatus for manufacturing an electrode, the rolling apparatus comprising: a rolling member that rolls an electrode substrate when the electrode substrate passes through; and a non-coated portion drawing member that additionally draws the non-coated portion of the electrode substrate that has passed through the rolling member, wherein the non-coated portion drawing member is configured such that the relative position of the non-coated portion drawing member relative to the electrode substrate is adjusted according to the state of the non-coated portion of the electrode substrate.

The rolling apparatus for manufacturing an electrode further comprises a driving unit that adjusts the position of the non-coated portion drawing member, wherein the non-coated portion drawing member maintains the position as it is, or move advance toward the electrode substrate, or retreat from the electrode substrate in the opposite direction, whereby the position of the non-coated portion drawing member may be adjusted.

The rolling apparatus for manufacturing an electrode further comprises a monitoring unit that monitors the electrode substrate and determines the state of the non-coated portion of the electrode substrate, wherein, when the non-coated portion of the electrode substrate is in a normal state, the non-coated portion drawing member maintains the position as it is, wherein when the non-coated portion of the electrode substrate is in a predetermined first abnormal state, the non-coated portion drawing member advances toward the electrode substrate, and wherein when the non-coated portion of the electrode substrate is in a predetermined second abnormal state, the non-coated portion drawing member may retract from the electrode substrate.

The first abnormal state may be a state in which a trough or crest of the swell of the non-coated portion occur in a longitudinal direction of the electrode substrate, and the second abnormal state may be a state in which a trough or crest of the swell of the non-coated portion occur in a width direction of the electrode substrate.

When an angle between the direction of the trough or crest of the swell of the non-coated portion and the advancing direction of the electrode substrate is 0 degrees or more and less than 45 degrees, the non-coated portion may be determined to be in a first abnormal state, when an angle between the direction of the trough or crest of the swell of the non-coated portion and the advancing direction of the electrode substrate is greater than 45 degrees and 90 degrees or less, the non-coated portion may be determined to be in a second abnormal state, and when the angle between the direction of the trough or crest of the swell of the non-coated portion and the advancing direction of the electrode substrate is 45 degrees, the non-coated portion may be determined to be in one of the first abnormal state and the second abnormal state.

When the non-coated portion of the electrode substrate is in the predetermined first abnormal state, the non-coated portion drawing member may advance toward the electrode substrate by a first predetermined value, and the advancing the non-coated portion drawing member by the first predetermined value may be repeatedly performed until the non-coated portion of the electrode substrate is determined to be in a normal state.

When the non-coated portion of the electrode substrate is in the predetermined second abnormal state, the non-coated portion drawing member may retreat from the electrode substrate by a second predetermined value, and the retreating the non-coated portion drawing member by the second predetermined value may be repeatedly performed until the non-coated portion of the electrode substrate is determined to be in a normal state.

The monitoring unit is located at a rear end of the non-coated portion drawing member and monitors the state of the non-coated portion of the electrode substrate that has passed through the non-coated portion drawing member, whereby the position of the non-coated portion drawing member may be adjusted.

The monitoring unit is located between the rear end of the rolling member and the front end of the non-coated portion drawing member and monitors the state of the non-coated portion of the electrode substrate that has passed through the rolling member, whereby the position of the non-coated portion drawing member may be adjusted.

The rolling member is a pair of rolling rollers that rotate in mutually opposite directions around a rotation axis, the non-coated portion drawing member is a non-coated portion pressing roller including a pressing portion, and the pressing portion is provided at a position corresponding to the non-coated portion of the electrode substrate, and may have a structure that protrudes from the outer peripheral surface of the non-coated portion pressing roller.

The driving unit may be an actuator connected to the non-coated portion pressing roller.

The rolling apparatus for manufacturing an electrode may further comprise a guide member that guides movement of the electrode substrate.

The rolling apparatus for manufacturing an electrode may further comprise an electrode rewinder that winds and recovers the electrode substrate.

According to another embodiment of the present invention, there is provided a rolling method for manufacturing an electrode, the rolling method comprising the steps of: rolling an electrode substrate with a rolling member; additionally drawing a non-coated portion of the rolled electrode substrate using a non-coated portion drawing member; and monitoring the electrode substrate with a monitoring unit to determine the state of the non-coated portion of the electrode substrate, wherein when the non-coated portion of the electrode substrate is in an abnormal state, the rolling method further comprises adjusting the relative position of the non-coated portion drawing member relative to the electrode substrate.

When the non-coated portion of the electrode substrate is in a normal state, the non-coated portion drawing member may maintain the position as it is.

The adjusting the relative position of the non-coated portion drawing member may comprise at least one of the steps of: allowing the non-coated portion drawing member to advance toward the electrode substrate when the non-coated portion of the electrode substrate is in a predetermined first abnormal state; and allowing the non-coated portion drawing member to retreat from the electrode substrate when the non-coated portion of the electrode substrate is in a predetermined second abnormal state.

The first abnormal state may be a state in which a trough or crest of the swell of the non-coated portion occur in the longitudinal direction of the electrode substrate, and the second abnormal state may be a state in which a trough or crest of the swell of the non-coated portion occur in the width direction of the electrode substrate.

When an angle between the direction of the trough or crest of the swell of the non-coated portion and the advancing direction of the electrode substrate is 0 degrees or more and less than 45 degrees, the non-coated portion may be determined to be in a first abnormal state, when an angle between the direction of the trough or crest of the swell of the non-coated portion and the advancing direction of the electrode substrate is greater than 45 degrees and 90 degrees or less, the non-coated portion may be determined to be in a second abnormal state, and when an angle between the direction of the trough or crest of the swell of the non-coated portion and the advancing direction of the electrode substrate is 45 degrees, the non-coated portion may be determined to be in one of the first abnormal state and the second abnormal state.

When the non-coated portion of the electrode substrate is in a predetermined first abnormal state, the non-coated portion drawing member may advance toward the electrode substrate by a first predetermined value, and the advancing the non-coated portion drawing member by the first predetermined value may be repeatedly performed until the non-coated portion of the electrode substrate is determined to be in a normal state.

When the non-coated portion of the electrode substrate is in a predetermined second abnormal state, the non-coated portion drawing member may retreat from the electrode substrate by a second predetermined value, and the retreating the non-coated portion drawing member by the second predetermined value may be repeatedly performed until the non-coated portion of the electrode substrate is determined to be in a normal state.

### [Advantageous Effects]

According to the embodiments, during the rolling process of the electrode substrate, additional drawing is applied to a non-coated portion 11 and the degree of drawing is adjusted, thereby capable of improving the problem of swells occurring in the non-coated portion 11 of the electrode substrate. Thereby, the production efficiency of the electrode assembly can be maximized and the quality of the produced electrode assembly can also be improved.

Effects obtainable from the present invention are not limited to the effects mentioned above, and additional other effects not mentioned herein will be clearly understood from the description and the appended drawings by those skilled in the art.

### [BRIEF DESCRIPTION OF THE DRAWINGS]

FIG. 1 shows a rolling apparatus for manufacturing an electrode according to the prior art.
FIG. 2 shows a rolling apparatus for manufacturing an electrode according to an embodiment of the present invention.
FIG. 3 is a schematic diagram showing a part of the electrode substrate.
FIG. 4 shows a non-coated portion rolling roller provided in the rolling apparatus for manufacturing an electrode of FIG. 2.
FIG. 5 shows an example of setting the advancing and retreating degree of the non-coated portion drawing member of FIG. 2 as a process variable of the wrap angle (θ).
FIGS. 6 and 7 each show examples of abnormal states of the non-coated portion of the electrode substrate.
FIG. 8 shows a modification of the rolling apparatus for manufacturing an electrode of FIG. 2 as is a rolling apparatus for manufacturing an electrode according to another embodiment of the present invention.
FIGS. 9 and 10 show a flowchart of a rolling method for manufacturing an electrode according to an embodiment of the present invention.

### [DETAILED DESCRIPTION OF THE EMBODIMENTS]

Hereinafter, various embodiments of the present invention will be described in detail with reference to the accompanying drawings so that those skilled in the art can easily carry out them. The present invention may be modified in various different ways, and is not limited to the embodiments set forth herein.

A description of portions that are not related to the description will be omitted for clarity, and same reference numerals designate same or like elements throughout the description.

Further, in the drawings, the size and thickness of each element are arbitrarily illustrated for convenience of description, and the present invention is not necessarily limited to those illustrated in the drawings. In the drawings, the thickness of layers, areas, etc. are exaggerated for clarity. In the drawings, for convenience of description, the thicknesses of a part and an area are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when it is referred to as "cross-sectional", it means when a target portion is viewed from the side of a cross section cut vertically.

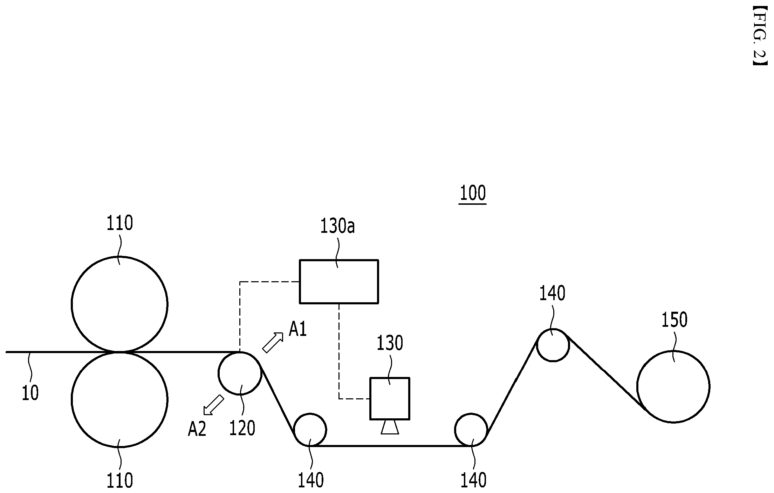

Now, a rolling apparatus 100 for manufacturing an electrode according to one embodiment of the present invention will be described with reference to FIGS. 2 to 5.

The rolling apparatus 100 for manufacturing an electrode in FIG. 2 includes a rolling member 110, a non-coated portion drawing member 120, a monitoring unit 130, a guide member 140, and an electrode rewinder 150.

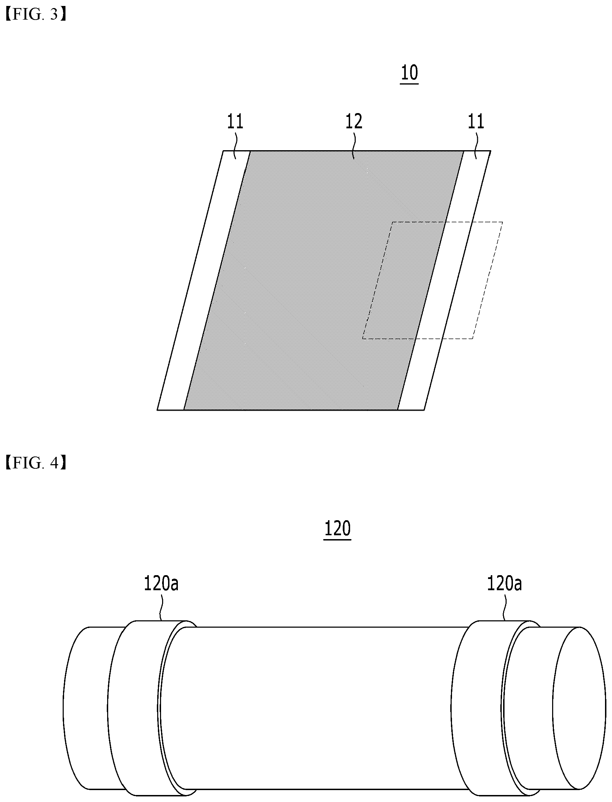

As shown in FIG. 3, the electrode substrate 10 has a structure in which an electrode mixture is coated on one or both sides of a current collector made of aluminum foil or the like, that is, a coated portion 12 (see FIG. 3). The electrode substrate 10 is rolled while passing through the rolling members 110.

The rolling members 110 may be, for example, a pair of rolling rollers. Each of the rolling rollers rotates in opposite directions to each other around a rotation axis in the longitudinal direction of each of the rolling rollers, which is located at the center of each of the pair of rolling rollers. When the electrode substrate 10 passes between the rolling rollers, the coated portion 12 is rolled.

At this time, a swell may occur in the non-coated portion 11 of the electrode substrate 10 that has passed through the rolling members 110.

Subsequently, the non-coated portion 11 of the electrode substrate 10 is drawn by the non-coated portion drawing member 120 disposed subsequent to the rolling member 110. More specifically, as shown in FIG. 4, the non-coated portion drawing member 120 may be, for example, a pressure roller. Further, in order to solve the problem of a swell occurring in the non-coated portion 11, a pressing portion 120a for pressing only the non-coated portion 11 of the electrode substrate 10 may be included.

The pressing portion 120a of the non-coated portion drawing member 120 is formed at a position corresponding to the non-coated portions 11 of the electrode substrate 10. Further, the pressing portion 120a has a structure that protrudes from the outer peripheral surface of the non-coated portion drawing member 120. Thereby, only the non-coated portion 11 can be pressed with the pressing portion 120a of the non-coated portion drawing member 120, except for the coated portion 12 of the electrode substrate 10.

The pressing portion 120a of the non-coated portion drawing member 120 may be formed integrally with the roller body of the non-coated portion drawing member 120, and may be attachable to/detachable from the outer peripheral surface of the non-coated drawing member 120 using a shrink fit method.

Further, the pressing portion 120a may include a heat ray therein for applying heat to the non-coated portion 11 in order to effectively roll the non-coated portion 11.

The width of the pressing portion 120a may be the same as or slightly smaller than the width of the non-coated portion 11 of the electrode substrate 10. For example, the pressing portion 120a may have a width of 90% to 100% of the width of the non-coated portion 11.

The non-coated portion drawing member 120 is formed from, for example, any one of a metal such as aluminum or an alloy thereof, or metals such as stainless steel, or engineering plastic materials with high strength and high hardness or a plastic material with low hardness or a plastic material made of rubber.

The non-coated portion drawing member 120 may rotate in the advancing direction of the electrode substrate 10 around a rotation axis located in the longitudinal direction at the center of the non-coated portion drawing member 120.

Meanwhile, both ends of the non-coated portion drawing member 120 are connected to a driving unit (not shown) that can adjust the position of the non-coated portion drawing member 120. The driving unit may be, for example, an actuator that adjusts the position of the non-coated portion drawing member 120. The driving unit may advance (A1) the non-coated portion drawing member 120 toward the electrode substrate 10, however, to the contrary, may also retreat(A2) it from the electrode substrate 10.

For example, bar-shaped support members are connected to both ends of the non-coated portion drawing member 120 in the direction of the rotation axis of the non-coated portion drawing member 120, and the non-coated portion drawing member 120 and the support member may be advanced(A1) toward the electrode substrate 10 by the driving unit, however, to the contrast, may also retreat(A2) it from the electrode substrate 10.

The state (e.g., degree of improving a swell) of the non-coated portion 11 of the electrode substrate 10 drawn by the non-coated portion drawing member 120 is monitored by the monitoring unit 130. The monitoring unit 130 may be, for example, a vision unit that images the state of the non-coated portion 11 of the electrode substrate 10.

The monitoring unit 130 monitors the state of the non-coated portion 11 and determines the state of the non-coated portion 11 using a processor 130a that is either integrated with the monitoring unit 130 or separately provided and connected to the monitoring unit 130. For example, the monitoring unit 130 may determine that the state of the non-coated portion 11 of the electrode substrate 10 is a normal state or an abnormal (non-normal) state.

The non-coated portion drawing member 120 is configured such that the relative position of the non-coated portion drawing member 120 relative to the electrode substrate 10 can be adjusted according to the state of the non-coated portion 11 of the electrode substrate 10.

If the state of the non-coated portion 11 of the electrode substrate 10 corresponds to a normal state, the position of the non-coated portion drawing member 120 is maintained as it is without change, and the pressing of the non-coated portion 11 is performed as it is. Here, "the state of the non-coated portion 11 corresponds to a normal state" means that, when the non-coated portion 11 of the electrode substrate is monitored with the monitoring unit 130, no swell or the like occurs in the non-coated portion 11, and the flatness of the coated portion 12 and the flatness of the non-coated portion 11 are the same or within the error range. The degree to which the coated portion 12 is drawn and the degree to which the non-coated portion 11 is drawn in the electrode substrate are within an error range. However, if the state of the non-coated portion 11 of the electrode substrate 10 corresponds to an abnormal (non-normal) state, the position of the non-coated portion drawing member 120 is adjusted by the driving unit.

If it is determined that the state of the non-coated portion 11 of the electrode substrate 10 corresponds to a predetermined first abnormal state among the abnormal (non-normal) states, the driving unit advances(A1) the non-coated portion drawing member 120 toward the electrode substrate 10. Alternatively, if it is determined that the state of the non-coated portion 11 of the electrode substrate 10 corresponds to a predetermined second abnormal state among the abnormal (non-normal) states, the driving unit retreats(A2) the non-coated portion drawing member 120 from the electrode substrate 10 in the opposite direction. That is, when a swell occurs in the non-coated portion 11 of the electrode substrate 10 that passed between the rolling members 110, the non-coated portion 11 is additionally drawn using the non-coated portion drawing member 120, thereby capable of solving the problem of a swell occurring in the non-coated portion 11. At this time, the status of the non-coated portion 11 of the electrode substrate 10 is monitored during the process using the monitoring unit 130, whereby the position of the non-coated portion drawing member 120 is adjusted so that the degree to which the non-coated portion 11 is additionally drawn is adjusted. Depending on various process variables such as the type of the electrode current collector and electrode mixture, the transfer speed of the electrode substrate 10, and the degree of rolling by the rolling member 110, the degree of a swell of the non-coated portion 11 may be improved when advancing (A1) the non-coated portion drawing member 120 toward the electrode substrate 10. In contrast, when the non-coated portion drawing member 120 is retreated (A2) from the electrode substrate 10 to reduce the degree of drawing applied to the non-coated portion 11, the degree of a swell of the non-coated portion 11 can be improved.

That is, a predetermined first abnormal state, a predetermined second abnormal state, and a normal state are set in advance in accordance with various environments in which the present invention is embodied, and the position of the non-coated portion drawing member 120 can be adjusted accordingly.

Further, in accordance with various environments in which the present invention is embodied, the degree to which the non-coated portion drawing member 120 advances(A1) and/or retreats(A2) is set in more detail in advance, and the position of the non-coated portion drawing member 120 can also be precisely adjusted.

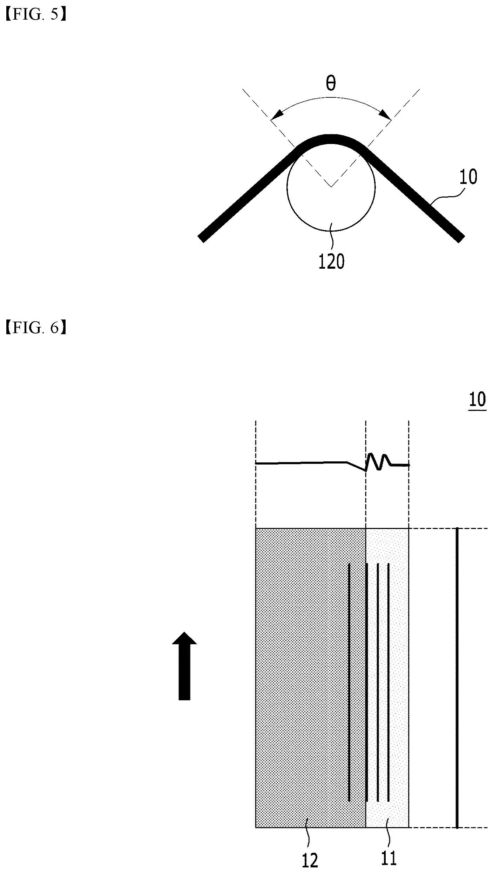

On the other hand, the present invention is not limited to those shown in FIG. 3 regarding the non-coated portion 11 of the electrode substrate 10, and similarly, the non-coated portion drawing member 120 is not limited to those shown in FIG. 4. Regarding the non-coated portion 11 of the electrode substrate 10 and the non-coated portion drawing member 120, various modifications and changes may be made to the present invention depending on various environments and situations in which the present invention is embodied, thereby applying and embodying the present invention. In some cases, the degree to which the non-coated portion drawing member 120 advances (A1) and/or retreats (A2) is set as a process variable of the wrap angle (θ) to adjust the degree of the angle. As shown in FIG. 5, the wrap angle means an angle that surrounds a part of the non-coated portion drawing member 120 when the electrode substrate 10 is in contact with the non-coated portion drawing member 120.

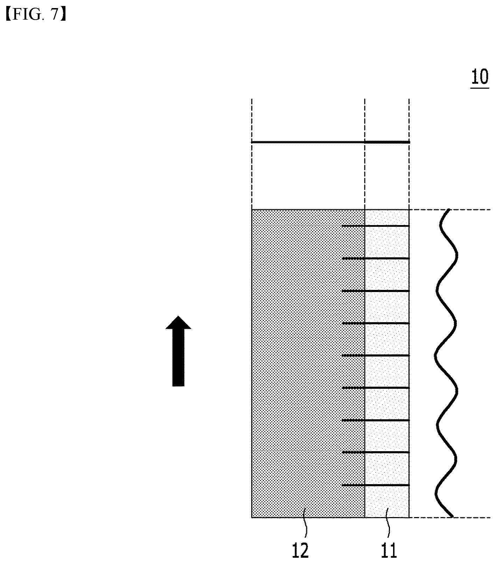

FIGS. 6 and 7 each show examples of abnormal (non-normal) states of the non-coated portions 11. They show a top view, a side view, and a cross-sectional view of the electrode substrate 10, respectively, by enlarging the portion indicated by the dotted line of the electrode substrate 10 shown in FIG. 3. The arrow indicates the advancing direction of the electrode substrate 10 during the process, and does not necessarily mean that the advancing direction is upward in the figure, and it is sufficient if the electrode substrate 10 advances in the longitudinal direction of the electrode substrate 10 in accordance with various environments to which the present invention is applied.

First, an example of a predetermined first abnormal state is a case where a swell of the non-coated portion 11 is formed along the advancing direction of the electrode substrate 10, as exemplarily shown in FIG. 6. This is the case where an extension line extending along the trough of the swell (in the direction of the trough of the swell) and/or an extension line extending along the crest of the swell (in the direction of the crest of the swell) is formed along the advancing direction of the electrode substrate 10.

This occurs when the degree to which the non-coated portion 11 is drawn is smaller than the degree to which the coated portion 12 is drawn. That is, even if the non-coated portion 11 is drawn by the non-coated portion drawing member 120, a swell is formed in the expanded non-coated portion 11 in the advancing direction of the electrode substrate 10 when it fails to sufficiently draw to the degree that the coated portion 12 is drawn.

Further, depending on the relative drawing degree of the non-coated portion 11 with respect to the coated portion 12, the trough of the swell becomes deeper or shallower. As the difference value between the drawing degree of the non-coated portion 11 and the drawing degree of the coated portion 12 (i.e., the absolute value of the value obtained by subtracting the drawing degree of the coated portion 12 from the drawing degree of the non-coated portion 11 is smaller, the trough of the swell becomes shallower, and then when the drawing degree of the coated portion 12 and the drawing degree of the non-coated portion 11 become equal within the error range, the swell of the non-coated portion 11 will disappear.

On the other hand, depending on the type of the electrode substrate and the process environment, in addition to the case where the direction of the trough and/or crest of the swell of the non-coated portion 11 matches the advancing direction of the electrode substrate 10, the direction of the trough and/or crest of the swell of the non-coated portion 11 may have an inclination angle obliquely to the advancing direction of the electrode substrate 10, and thus, the angle between the direction of the trough and/or crest of the swell of the non-coated portion 11 and the advancing direction of the electrode substrate 10 may be formed within a range of 0 degrees or more and 45 degrees or less.

In summary, the monitoring unit 130 monitors the direction of the trough and/or crest of the swell of the non-coated portion 11, and determines it as a first abnormal state if it is formed along the advancing direction of the electrode substrate 10.

In more detail, the meaning that the direction of the trough and/or crest of the swell of the non-coated portion 11 is formed along the advancing direction of the electrode substrate 10 is determined as the first abnormal state when the angle between the direction of the trough and/or crest of the swell of the non-coated portion 11 and the advancing direction of the electrode substrate 10 is 0 degrees or more and 45 degrees or less.

When the state of the non-coated portion 11 of the electrode substrate 10 is determined to be in a first abnormal state, the non-coated portion drawing member 120 advances toward the electrode substrate 10.

Further, an example of the second predetermined abnormal state is a case where the swell of the non-coated portion 11 is formed along the width direction of the electrode substrate 10 (direction perpendicular to the advancing direction of the electrode substrate 10), as exemplarily shown in FIG. 7. This is the case where an extension line extending along the trough of the swell (direction of the trough of the swell) and/or an extension line extending along the crest of the swell (direction of the crest of the swell) is formed along the width direction of the electrode substrate 10.

This occurs when the degree to which the non-coated portion 11 is drawn is greater than the degree to which the coated portion 12 is drawn. That is, if the non-coated portion 11 is drawn by the non-coated portion drawing member 120 but the non-coated portion 11 is drawn more than the coated portion 12, a swell is formed in the non-coated portion 11, which is relatively longer in length, in the width direction of the electrode substrate 10.

Further, depending on the relative drawing degree of the non-coated portion 11 with respect to the coated portion 12, the trough of the swell becomes deeper or shallower. As the difference value between the drawing degree of the non-coated portion 11 and the drawing degree of the coated portion 12 (i.e., the absolute value of the value obtained by subtracting the drawing degree of the coated portion 12 from the drawing degree of the non-coated portion 11) is smaller, the trough of the swell becomes shallower, and then when the drawing degree of the coated portion 12 and the drawing degree of the non-coated portion 11 become equal within the error range, the swell of the non-coated portion 11 disappears.

On the other hand, depending on the type of the electrode substrate and the process environment, in addition to the case where the direction of the trough and/or crest of the swell of the non-coated portion 11 is perpendicular to the advancing direction of the electrode substrate 10, the direction of the trough and/or crest of the swell of the non-coated portion 11 may have an inclination angle obliquely to the direction perpendicular to the advancing direction of the electrode substrate 10, and thus, the angle between the direction of the trough and/or crest of the swell of the non-coated portion 11 and the advancing direction of the electrode substrate 10 may be formed within a range of 45 degrees or more and 90 degrees or less.

In summary, the monitoring unit 130 monitors the direction of the trough and/or crest of the swell of the non-coated portion 11, and determines it as a second abnormal state if it is formed along the width direction of the electrode substrate 10.

In more detail, the meaning that the direction of the trough and/or crest of the swell of the non-coated portion 11 is formed along the width direction of the electrode substrate 10 is determined as the second abnormal state when the angle between the direction of the trough and/or crest of the swell of the non-coated portion 11 and the advancing direction of the electrode substrate 10 is 45 degrees or more and 90 degrees or less.

When the state of the non-coated portion 11 of the electrode substrate 10 is determined to be in a second abnormal state, the non-coated portion drawing member 120 retreats from the electrode substrate 10.

For reference, when the trough and/or crest of the swell of the non-coated portion 11 is 45 degrees in the basis of the advancing direction of the electrode substrate 10, whether the non-coated portion drawing member 120 is advanced (A1) or retreated (A2) is set in advance in accordance with the relevant environment, depending on various factors, such as the type of electrode current collector and electrode mixture, the transfer speed of the electrode substrate 10, and the degree of rolling by the rolling member 110. That is, when the angle between the direction of the trough and/or crest of the swell of the non-coated portion 11 and the advancing direction of the electrode substrate 10 is 45 degrees, it is determined by any one of the first abnormal state and the second abnormal state depending on the type of electrode substrate 10, the process environment, and the like in accordance with the environment in which the present invention is embodied.

On the other hand, the degree to which the non-coated portion drawing member 120 advances toward the electrode substrate 10 when the state of the non-coated portion 11 of the electrode substrate 10 is determined to be in a first abnormal state, and the degree to which the non-coated portion drawing member 120 retreats from the electrode substrate 10 when the state of the non-coated portion 11 of the electrode substrate 10 is determined to be a second abnormal state, may be respectively determined in advance depending on the type of electrode substrate 10 and/or the corresponding process environment. In more detail, the degree to which the non-coated portion drawing member 120 advances and the degree to which it retreats are determined in advance as a first predetermined value and a second predetermined value, respectively.

When the state of the non-coated portion 11 of the electrode substrate 10 monitored by the monitoring unit 130 is determined to be a first abnormal state, the corresponding result is fed back to the non-coated portion drawing member 120, whereby the non-coated portion drawing member 120 advances toward the electrode substrate 10 by a first predetermined value.

In the monitoring unit 130, the non-coated portion 11 of the electrode substrate 10 drawn by the non-coated portion drawing member 120 subsequent to the forward/backward movement of the non-coated portion drawing member 120 is monitored by the monitoring unit 130. Alternatively, regardless of this, the non-coated portion 11 of the electrode substrate 10 drawn by the non-coated portion drawing member 120 may be continuously monitored by the monitoring unit 130.

When it is determined that the state of the non-coated portion 11 of the electrode substrate 10 drawn by the non-coated portion drawing member 120 that has advanced by a first predetermined value is still a first abnormal state, the corresponding result is fed back to the non-coated portion drawing member 120, and the non-coated portion drawing member 120 advances again toward the electrode substrate 10 by the first predetermined value.

When it is determined that the state of the non-coated portion 11 of the electrode substrate 10 drawn by the non-coated portion drawing member 120 that has advanced by a first predetermined value is a normal state, the non-coated portion drawing member 120 does not advances or retreats, but maintains the position as it is.

Rather, when it is determined that the state of the non-coated portion 11 of the electrode substrate 10 drawn by the uncoated region drawing member 120 that has advanced by the first predetermined value is the second abnormal state, the corresponding result is fed back to the non-coated portion drawing member 120, and the non-coated portion drawing member 120 retreats from the electrode substrate 10 by a second predetermined value.

The above procedure is repeatedly performed until the state of the non-coated portion 11 of the electrode substrate 10 drawn by the non-coated portion drawing member 120 is determined to be in a normal state.

Similarly, if the state of the non-coated portion 11 of the electrode substrate 10 monitored by the monitoring unit 130 is determined to be in a second abnormal state, the corresponding result is fed back to the non-coated portion drawing member 120, whereby the non-coated portion drawing member 120 retreats from the electrode substrate 10 by a second predetermined value.

When it is determined that the state of the non-coated portion 11 of the electrode substrate 10 drawn by the non-coated portion drawing member 120 that has retreated by a second predetermined value is still a second abnormal state, the corresponding result is fed back to the non-coated portion drawing member 120, and the non-coated portion drawing member 120 advances again from the electrode substrate 10 by a second predetermined value.

When it is determined that the state of the non-coated portion 11 of the electrode substrate 10 drawn by the non-coated portion drawing member 120 that has retreated by a second predetermined value is a normal state, the non-coated portion drawing member 120 does not advance or retreats, but maintains the position as it is.

Rather, when it is determined that the state of the non-coated portion 11 of the electrode substrate 10 drawn by the non-coated portion drawing member 120 that has retreated by a second predetermined value is a first abnormal state, the corresponding result is fed back to the non-coated portion drawing member 120, and the non-coated portion drawing member 120 advances toward the electrode substrate 10 by a first predetermined value.

The above procedure is repeatedly performed until the state of the non-coated portion 11 of the electrode substrate 10 drawn by the non-coated portion drawing member 120 is determined to be in a normal state.

Further, each of the first predetermined value and the second predetermined value may be set in various ways in advance in accordance with the environment, depending on the type of electrode substrate 10 and the process environment (various process variables such as the type of electrode current collector and electrode mixture, the transfer speed of the electrode substrate 10, and the degree of rolling by the rolling member 110, etc.) in which the present invention is embodied.

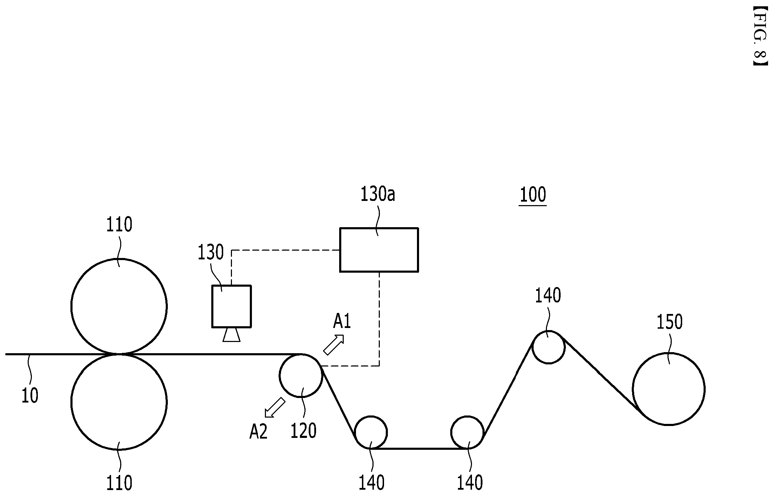

FIG. 8 shows a modification of the rolling apparatus for manufacturing an electrode of FIG. 2.

First, in the case of FIG. 2, the monitoring unit 130 is located at the rear end of the non-coated portion drawing member 120. Accordingly, the monitoring unit 130 monitors the electrode substrate 10 that has passed through the non-coated portion drawing member 120, and adjusts the position of the non-coated portion drawing member 120, whereby the degree of a swell of the non-coated portion 11 of the electrode substrate 10 that enters the non-coated portion drawing member 120 is adjusted.

In the case of FIG. 8, the monitoring unit 130 is located between the rear end of the rolling member 110 and the front end of the non-coated portion drawing member 120. Thereby, it monitors the electrode substrate 10 that has passed through the rolling member 110, and adjusts the position of the non-coated portion drawing member 120.

As described above in FIG. 2, in the method of monitoring the electrode substrate 10 to adjust the position of the non-coated portion drawing member 120, a predetermined first abnormal state, a predetermined second abnormal state, and a normal state can be set in advance in accordance with the various environments in which the present invention is embodied, and the position of the non-coated portion drawing member 120 can be adjusted accordingly.

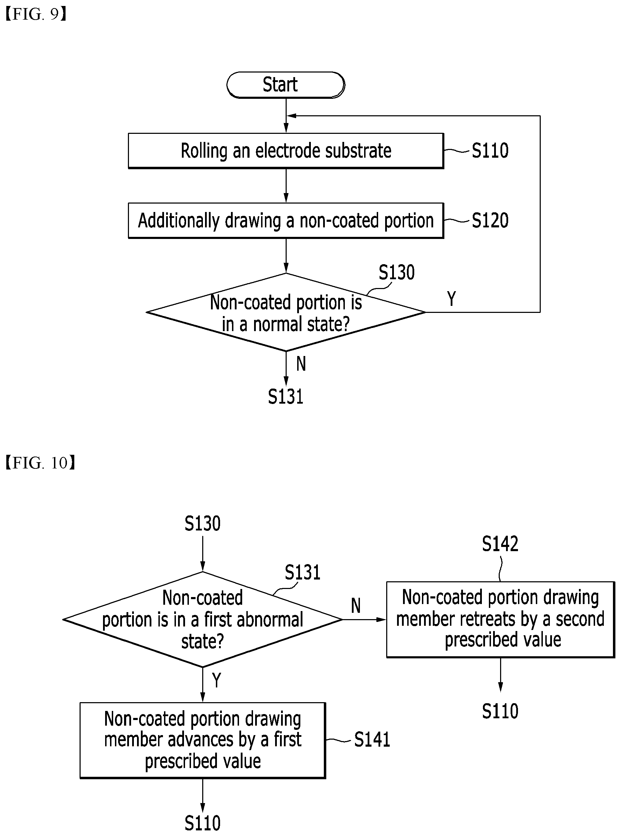

Next, a rolling method for manufacturing an electrode according to an embodiment of the present invention will be described with reference to FIGS. 9 and 10.

Referring to FIG. 9, the rolling method for manufacturing an electrode according to an embodiment of the present invention comprises a step of rolling the electrode substrate with the rolling member 110 (S110); a step of additionally drawing the non-coated portion 11 of the rolled electrode substrate 10 with the non-coated portion drawing member 120 (S120); and a step of monitoring the electrode substrate with the monitoring unit 130 to determine the state of the non-coated portion of the electrode substrate (S130). In the embodiment of FIG. 2, step S130 proceeds subsequent to step S120. Alternatively, in the embodiment of FIG. 8, step S120 may proceed after step S130 is performed. Next, the apparatus in the embodiment of FIG. 2 will be mainly described with reference to FIG. 10.

In step S130, it is determined whether the state of the non-coated portion is normal, and if the state of the non-coated portion is determined to be abnormal, step S130 includes step S131 of determining whether the state of the non-coated portion is a first abnormal state or a second abnormal state. When the state of the non-coated portion is determined to be abnormal, step S131 determines whether the direction of the swell of the non-coated portion is formed in the advancing direction of the electrode substrate or in the width direction of the electrode substrate, and the like. For a more detailed explanation regarding the point of determining whether the state of the non-coated portion is a first abnormal state or a second abnormal state, refer to the above because it overlaps with the contents described above in FIGS. 1 to 7.

Depending on the state of the non-coated portion 11 of the electrode substrate monitored by the monitoring unit, the method comprises a step (S140) of adjusting the relative position of the non-coated portion drawing member with respect to the electrode substrate using the driving unit.

In step S130, if the non-coated portion of the electrode substrate is determined to be in a normal state, the non-coated portion drawing member maintains the position as it is.

If it is determined in step S130 (step S131) that the non-coated portion of the electrode substrate is in a predetermined first abnormal state, step S140 comprises a step (S141) in which the non-coated portion drawing member advances toward the electrode substrate by a first predetermined value. Further, if it is determined in S130 (step S131) that the non-coated portion of the electrode substrate is in a predetermined second abnormal state, step S140 includes a step (S142) in which the non-coated portion drawing member retreats from the electrode substrate by a second predetermined value. The step (S140) of adjusting the relative position of the non-coated portion drawing member is repeatedly performed until the non-coated portion of the electrode substrate is determined to be in a normal state.

In one embodiment, the electrode refers to a positive electrode and/or a negative electrode of a lithium secondary battery.

The positive electrode has a structure in which a two-layered positive electrode active material layer is laminated on a positive electrode current collector. In one example, the positive electrode active material layer includes a positive electrode active material, a conductive material, and a binder polymer, and, if necessary, may further include a positive electrode additive commonly used in the art.

The positive electrode active material may be a lithium-containing oxide, and may be the same or different. As the lithium-containing oxide, a lithium-containing transition metal oxide can be used.

For example, the lithium-containing transition metal oxide may be any one selected from the group consisting of LiₓCoO₂(0.5<x<1.3), LiₓNiO₂(0.5<x<1.3), LiₓMnO₂(0.5<x<1.3), LiₓMn₂O₄(0.5<x<1.3), Liₓ(NiₐCo_{b}Mn_{c})O₂(0.5<x<1.3, 0<a<1, 0<b<1, 0<c<1, a+b+c=1), LiₓNi_{1-y}Co_{y}O₂(0.5<x<1.3, 0<y<1), LiₓCo_{1-y}Mn_{y}O₂(0.5<x<1.3, 0≤y<1), LiₓNi_{1-y}Mn_{y}O₂(0.5<x<1.3, 0≤y<1), Liₓ(NiₐCo_{b}Mn_{c})O₄(0.5<x<1.3, 0<a<2, 0<b<2, 0<c<2, a+b+c=2), LiₓMn_{2-z}Ni_{z}O₄(0.5<x<1.3, 0<z<2), LiₓMn_{2-z}Co_{z}O₄(0.5<x<1.3, 0<z<2), LiₓCoPO₄(0.5<x<1.3) and LiₓFePO₄(0.5<x<1.3), or a mixture of two or more thereof. The lithium-containing transition metal oxide may be coated with a metal such as aluminum (Al) or a metal oxide. Further, in addition to the lithium-containing transition metal oxide, one or more types selected from the group consisting of sulfide, selenide, and halide may also be used.

The positive electrode active material may be contained in the range of 94.0 to 98.5% by weight in the positive electrode active material layer. When the content of the positive electrode active material satisfies the above range, it is advantageous in terms of manufacturing a high-capacity battery and providing sufficient conductivity of the positive electrode or adhesion between electrode materials.

The current collector used for the positive electrode is a metal having high conductivity, which can be used without limitation as long as the positive electrode active material slurry can easily adhere and also has no reactivity within the voltage range of the electrochemical device. Specifically, non-limiting examples of the positive electrode current collector include foil made of aluminum, nickel, or a combination thereof.

The positive electrode active material layer further includes a conductive material. The conductive material is typically added in an amount of 1 to 30% by weight based on the total weight of the mixture including the positive electrode active material. Such a conductive material is not particularly limited as long as it has conductivity without causing a chemical change in the secondary battery. The conductive material may include one or more selected from the group consisting of graphite such as natural graphite or artificial graphite; carbon blacks , acetylene black, ketjen black, channel black, furnace black, lamp black, and thermal black; conductive fibers such as carbon fiber and metal fiber; fluorocarbons; metal powders such as aluminum and nickel powder; conductive whiskers such as zinc oxide and potassium titanate; conductive metal oxides such as titanium oxide; polyphenylene derivatives; and the like.

The negative electrode has a structure in which a two-layered negative electrode active material layer is laminated on a negative electrode current collector. In one example, the negative electrode active material layer includes a negative electrode active material, a conductive material, a binder polymer, and the like, and, if necessary, may further include a negative electrode additive commonly used in the art.

The negative electrode active material may include carbon material, lithium metal, silicon, tin, or the like. When carbon material is used as a negative electrode active material, both low-crystalline carbon and high-crystalline carbon can be used. Typical examples of the low-crystalline carbon include soft carbon and hard carbon, and typical examples of the high-crystalline carbon include one or more types of high-temperature calcined charcoal selected from the group consisting of natural graphite, kish graphite, pyrolytic carbon, mesophase pitch-based carbon fiber, mesocarbon microbeads, mesophase pitches and petroleum or coal tar pitch derived cokes.

Non-limiting examples of the current collector used in the negative electrode include foil made of copper, gold, nickel, or copper alloy, or a combination thereof. Moreover, the current collector may be used by laminating the substrates made of the above materials.

Further, the negative electrode may include conductive materials and binders commonly used in the field.

Meanwhile, the rolling apparatus 100 for manufacturing an electrode according to an embodiment of the present invention includes a guide member 140 that guides the movement of the electrode substrate 10. The guide member 140 may be, for example, a transfer roller. The guide member 140 may adjust the meandering of the electrode substrate 10 or the tension of the electrode substrate 10. Finally, the electrode substrate 10 is rewound by an electrode rewinder 150.

The electrode manufactured by applying the control method of the rolling apparatus for manufacturing an electrode according to the present embodiment described above may be included in a secondary battery, and a plurality of secondary batteries described above may be gathered to form a battery module. The battery modules may be mounted together with various control and protection systems such as BMS (battery management system) and a cooling system to form a battery pack.

The above-mentioned secondary battery, the battery module and the battery pack can be applied to various devices. Such a device can be applied to a vehicle means such as an electric bicycle, an electric vehicle, or a hybrid vehicle, but the present disclosure is not limited thereto, and is applicable to various devices that can use a secondary battery.

Although the invention has been described in detail with reference to preferred embodiments of the present invention, the scope of the present invention is not limited thereto, and various modifications and improvements can be made by those skilled in the art using the basic concepts of the present invention, which are defined in the appended claims, which also falls within the scope of the present invention.

### [Description of Reference Numerals]

10: electrode substrate
11: non-coated portion
12: coated portion
100: rolling apparatus for manufacturing electrode
110: rolling member
120: non-coated portion drawing member
120a: pressing portion
130: monitoring unit
130a: processor
140: guide member
150: electrode rewinder

## Claims

1. A rolling apparatus for manufacturing an electrode, the rolling apparatus comprising:
a rolling member that rolls an electrode substrate when the electrode substrate passes through; and
a non-coated portion drawing member that additionally draws a non-coated portion of the electrode substrate that has passed through the rolling member,
wherein the non-coated portion drawing member is configured such that a relative position of the non-coated portion drawing member relative to the electrode substrate is adjusted according to a state of the non-coated portion of the electrode substrate.

2. The rolling apparatus for manufacturing an electrode according to claim 1,
further comprising a driving unit that adjusts a position of the non-coated portion drawing member,
wherein the non-coated portion drawing member maintains the position as it is, or advances toward the electrode substrate, or retreats from the electrode substrate in the opposite direction, whereby the position of the non-coated portion drawing member is adjusted.

3. The rolling apparatus for manufacturing an electrode according to claim 2,
further comprising a monitoring unit that monitors the electrode substrate and determines a state of the non-coated portion of the electrode substrate,
wherein, when the non-coated portion of the electrode substrate is in a normal state, the non-coated portion drawing member maintains the position as it is,
wherein, when the non-coated portion of the electrode substrate is in a predetermined first abnormal state, the non-coated portion drawing member advances toward the electrode substrate, and
wherein when the non-coated portion of the electrode substrate is in a predetermined second abnormal state, the non-coated portion drawing member retracts from the electrode substrate.

4. The rolling apparatus for manufacturing an electrode according to claim 3, wherein:
the first abnormal state is a state in which a trough or crest of the swell of the non-coated portion occur in a longitudinal direction of the electrode substrate, and
the second abnormal state is a state in which a trough or crest of the swell of the non-coated portion occur in a width direction of the electrode substrate.

5. The rolling apparatus for manufacturing an electrode according to claim 3, wherein:
when an angle between a direction of the trough or crest of the swell of the non-coated portion and an advancing direction of the electrode substrate is 0 degrees or more and less than 45 degrees, the non-coated portion is determined to be in the first abnormal state,
when an angle between the direction of the trough or crest of the swell of the non-coated portion and the advancing direction of the electrode substrate is greater than 45 degrees and 90 degrees or less, the non-coated portion is determined to be in the second abnormal state, and
when an angle between the direction of the trough or crest of the swell of the non-coated portion and the advancing direction of the electrode substrate is 45 degrees, the non-coated portion is determined to be in one of the first abnormal state and the second abnormal state.

6. The rolling apparatus for manufacturing an electrode according to claim 3, wherein:
when the non-coated portion of the electrode substrate is in the predetermined first abnormal state, the non-coated portion drawing member advances toward the electrode substrate by a first predetermined value, and
the advancing the non-coated portion drawing member by the first predetermined value is repeatedly performed until the non-coated portion of the electrode substrate is determined to be in a normal state.

7. The rolling apparatus for manufacturing an electrode according to claim 3, wherein:
when the non-coated portion of the electrode substrate is in the predetermined second abnormal state, the non-coated portion drawing member retreats from the electrode substrate by a second predetermined value,
the retreating the non-coated portion drawing member by the second predetermined value is repeatedly performed until the non-coated portion of the electrode substrate is determined to be in a normal state.

8. The rolling apparatus for manufacturing an electrode according to claim 3, wherein:
the monitoring unit is located at a rear end of the non-coated portion drawing member and monitors a state of the non-coated portion of the electrode substrate that has passed through the non-coated portion drawing member,
whereby a position of the non-coated portion drawing member is adjusted.

9. The rolling apparatus for manufacturing an electrode according to claim 3, wherein:
the monitoring unit is located between a rear end of the rolling member and a front end of the non-coated portion drawing member and monitors a state of the non-coated portion of the electrode substrate that has passed through the rolling member,
whereby a position of the non-coated portion drawing member is adjusted.

10. The rolling apparatus for manufacturing an electrode according to claim 1, wherein:
the rolling member is a pair of rolling rollers that rotate in mutually opposite directions around a rotation axis,
the non-coated portion drawing member is a non-coated portion pressing roller including a pressing portion, and
the pressing portion is provided at a position corresponding to the non-coated portion of the electrode substrate, and has a structure that protrudes from an outer peripheral surface of the non-coated portion pressing roller.

11. The rolling apparatus for manufacturing an electrode according to claim 10, wherein:
the driving unit is an actuator connected to the non-coated portion pressing roller.

12. The rolling apparatus for manufacturing an electrode according to claim 1,
further comprising a guide member that guides movement of the electrode substrate.

13. The rolling apparatus for manufacturing an electrode according to claim 1,
further comprising an electrode rewinder that winds and recovers the electrode substrate.

14. A rolling method for manufacturing an electrode, the rolling method comprising the steps of:
rolling an electrode substrate with a rolling member;
additionally drawing a non-coated portion of the rolled electrode substrate using a non-coated portion drawing member; and
monitoring the electrode substrate with a monitoring unit to determine a state of the non-coated portion of the electrode substrate,
wherein, when the non-coated portion of the electrode substrate is in an abnormal state, the rolling method further comprises adjusting a relative position of the non-coated portion drawing member relative to the electrode substrate.

15. The rolling method for manufacturing an electrode according to claim 14, wherein:
when the non-coated portion of the electrode substrate is in a normal state, the non-coated portion drawing member maintains the position as it is.

16. The rolling method for manufacturing an electrode according to claim 14, wherein:
the adjusting the relative position of the non-coated portion drawing member comprises at least one of the steps of:
allowing the non-coated portion drawing member to advance toward the electrode substrate when the non-coated portion of the electrode substrate is in a predetermined first abnormal state; and
allowing the non-coated portion drawing member to retreat from the electrode substrate when the non-coated portion of the electrode substrate is in a predetermined second abnormal state.

17. The rolling method for manufacturing an electrode according to claim 14, wherein:
the first abnormal state is a state in which a trough or crest of a swell of the non-coated portion occur in a longitudinal direction of the electrode substrate, and
the second abnormal state is a state in which a trough or crest of the swell of the non-coated portion occur in a width direction of the electrode substrate.

18. The rolling method for manufacturing an electrode according to claim 14, wherein:
when an angle between the direction of the trough or crest of the swell of the non-coated portion and an advancing direction of the electrode substrate is 0 degrees or more and less than 45 degrees, the non-coated portion is determined to be in the first abnormal state,
when an angle between the direction of the trough or crest of the swell of the non-coated portion and the advancing direction of the electrode substrate is greater than 45 degrees and 90 degrees or less, the non-coated portion is determined to be in the second abnormal state, and
when an angle between the direction of the trough or crest of the swell of the non-coated portion and the advancing direction of the electrode substrate is 45 degrees, the non-coated portion is determined to be in one of the first abnormal state and the second abnormal state.

19. The rolling method for manufacturing an electrode according to claim 14, wherein:
when the non-coated portion of the electrode substrate is in the predetermined first abnormal state, the non-coated portion drawing member advances toward the electrode substrate by a first predetermined value, and
the advancing the non-coated portion drawing member by the first predetermined value is repeatedly performed until the non-coated portion of the electrode substrate is determined to be in a normal state.

20. The rolling method for manufacturing an electrode according to claim 14, wherein:
when the non-coated portion of the electrode substrate is in the predetermined second abnormal state, the non-coated portion drawing member retreats from the electrode substrate by a second predetermined value, and
the retreating the non-coated portion drawing member by the second predetermined value is repeatedly performed until the non-coated portion of the electrode substrate is determined to be in a normal state.
